# EUROPÄISCHE PATENTSCHRIFT

(11) **EP 3 869 240 B1**
(45) Veröffentlichungstag und Bekanntmachung des Hinweises auf die Patenterteilung: **29.01.2025**
(21) Anmeldenummer: 20157966.1
(22) Anmeldetag: 18.02.2020
(51) Int. Cl.: G01V 8/10, B25J 9/16, G01S 17/04

(54) **SENSORANORDNUNG UND VERFAHREN ZUM BETRIEB EINER SENSORANORDNUNG**
SENSOR ASSEMBLY AND METHOD FOR OPERATING A SENSOR ASSEMBLY
AGENCEMENT DE CAPTEURS ET PROCÉDÉ DE FONCTIONNEMENT D'UN AGENCEMENT DE CAPTEURS

(43) Veröffentlichungstag der Anmeldung: 25.08.2021
(73) Patentinhaber: Leuze electronic GmbH + Co. KG, 73277 Owen/Teck (DE)
(72) Erfinder: Feller, Bernhard, 86316 Friedberg (DE); Hess, Alexander, 68199 Mannheim (DE); Ruff, Markus, 73734 Esslingen am Neckar (DE); Brunner, Rolf, 82223 Eichenau (DE)
(74) Vertreter: Ruckh, Rainer Gerhard

(56) Entgegenhaltungen:
- EP-A1- 3 470 879
- DE-A1- 102018 214 439
- US-A1- 2015 049 911
- US-A1- 2018 222 052

## Beschreibung

Die Erfindung betrifft eine Sensoranordnung und ein Verfahren zum Betrieb einer Sensoranordnung.

Derartige Sensoranordnungen werden insbesondere zur Gefahrenbereichsüberwachung im Bereich der Sicherheitstechnik eingesetzt.

Ein einfaches Beispiel für eine derartige Sensoranordnung ist ein optischer Sensor mit einer zugeordneten Steuereinheit, die eine Maschine steuert, von der innerhalb eines Gefahrenbereichs Gefährdungen von Personen ausgehen können. Der optische Sensor ist zur Objektüberwachung in einem räumlichen oder flächigen Erfassungsbereich ausgebildet, wobei dieser beispielsweise als Flächendistanzsensor oder Kamerasensor ausgebildet sein kann. Zur Sicherheitsüberwachung wird im optischen Sensor ein Schutzfeld definiert. Wird mit dem optischen Sensor ein Objekteingriff registriert, gibt der optische Sensor ein entsprechendes Ausgangssignal an die Steuereinheit aus, sodass diese eine Sicherheitsfunktion auslöst, beispielsweise die Maschine stillsetzt. Um eine Anpassung an sich ändernde Gefahrenbereiche zu ermöglichen ist es bekannt für den optischen Sensor mehrere Schutzfelder vorzugeben, sodass je nach Gefahrensituation unterschiedliche Schutzfelder aktiviert werden können.

In der EP 3 470 879 A1 wird ein optoelektronischer Sensor zur sicheren Erfassung von Objekten in einem Überwachungsbereich angegeben, der einen Lichtempfänger zum Erzeugen eines Empfangssignals aus Empfangslicht aus dem Überwachungsbereich und eine Auswertungseinheit aufweist, die dafür ausgebildet ist, simultan eine erste Anzahl von Überwachungsfeldern zu überwachen und dazu anhand des Empfangssignals festzustellen, in welchem Überwachungsfeld oder welchen Überwachungsfeldern sich ein Objekt befindet. Dabei überlappen die Überwachungsfelder einander zumindest teilweise, so dass eine zweite Anzahl größer der ersten Anzahl von Überwachungssegmenten entsteht, wobei sich die Überwachungssegmente voneinander dadurch unterscheiden, welche Überwachungsfelder dort überlappen.

Die DE 10 2018 214 439 A1 betrifft ein Verfahren und eine Vorrichtung zur Absicherung eines Arbeitsbereiches eines Roboters während einer Benutzungsphase. Es ist vorgesehen, dass ein Arbeitsbereich bis zu 360° um den Roboter herum in Planflächeneinheiten als Bestandteil eines Koordinatensystems aufgeteilt wird und anschließend eine Kalibrierung mit einem Koordinatensystem von einer örtlich fest verbauten Scaneinrichtung vollzogen wird. Nach einer Ausrichtung der Scaneinrichtung ist es möglich, dass der Arbeitsbereich vollständig gescannt werden kann. Durch den Roboter werden die Planflächeneinheiten in Abhängigkeit seines Bewegungsablaufes in mindestens zwei unterschiedlich gewichtete Planflächeneinheiten und in nicht gewichtete Planflächeneinheiten eingeteilt. Dies geschieht dynamisch und kontinuierlich vor und während der Benutzungsphase. Die gewichteten Planflächeneinheiten stellen dabei ein Schutzfeld dar. Nachdem diese Information über das Schutzfeld an die Scaneinrichtung gesendet wurde, ist diese in der Lage, eine Überwachung des Arbeitsbereiches durchzuführen, wobei ein ungewünschtes Ereignis in dem Schutzfeld registriert werden kann. Eine Information über ein solches ungewünschtes Ereignis wird an den Roboter oder eine sichere Steuereinrichtung gesendet. Je nachdem, wo das ungewünschte Ereignis stattfindet, wird der Roboter entsprechend angesteuert.

Die US 2018/0222052 A1 betrifft ein System zur Überwachung eines industriellen Umfelds, insbesondere eines Bereichs an einem Roboter. Das System umfasst mehrere Sensoren, mit denen eine Bereichsüberwachung durchgeführt wird. Je nachdem, ob in einem Teilbereich ein Objekt erfasst wird, wird dieser als "belegt" oder "frei" signalisiert. Von einem Objekt abgeschattete Bereiche werden als "unbestimmt" klassifiziert. Objekte können von Personen durch eine Clusterbildung von Bereichen unterschieden werden. Weiterhin wird bei der Objekterkennung erfasst, ob ein Objekt innerhalb einer vorgegebenen Distanz zu einer Maschine vorhanden ist. Ist dies der Fall, wird die Maschine gestoppt.

Die US 2015/0049911 A1 betrifft ein Verfahren zum Absichern eines gefährlichen Arbeitsbereichs einer automatisiert arbeitenden Maschine, wobei eine Sensoreinheit in definierten Zeitintervallen jeweils ein aktuelles 3D Bild von dem Arbeitsbereich liefert. Eine Auswerteeinheit beinhaltet einen fehlersicheren Fremdobjektdetektor, einen Klassifizierer, einen Personenfolger und einen Vergleicher. Der Fremdobjektdetektor erzeugt in Abhängigkeit von dem jeweils aktuellen 3D Bild und in Abhängigkeit von einem definierten Schutzbereich ein erstes Signal mit einer ersten Positionsinformation, die für die Position eines Fremdobjekts in dem Schutzbereich repräsentativ ist. Der Klassifizierer versucht, das Fremdobjekt als Person zu identifizieren. Der Personenfolger verfolgt die identifizierte Person über eine Serie von jeweils aktuellen 3D Bildern und bestimmt nach jedem neuen 3D Bild eine zweite Positionsinformation, die die aktuelle Position der identifizierten Person repräsentiert. Wenn die Position des Fremdobjekts gemäß der ersten Positionsinformation und die Position der identifizierten Person verschieden voneinander sind, wird ein Steuersignal zum Anhalten der Maschine erzeugt.

Der Erfindung liegt die Aufgabe zugrunde eine Sensoranordnung der eingangs genannten Art bereitzustellen, welche eine erhöhte Funktionalität aufweist.

Zur Lösung dieser Aufgabe sind die Merkmale des unabhängigen Anspruchs vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Sensor zur Erfassung von Objekten in einem Überwachungsbereich. Der Überwachungsbereich ist in Rasterfelder unterteilt. Innerhalb des Überwachungsbereichs ist wenigstens ein Schutzfeld definiert. Mit dem Sensor ist ein Rasterfeld bei einem Objekteingriff markiert und das Schutzfeld wird mit dem Sensor überwacht. Eine Steuereinheit ist vorgesehen, in welcher eine Auswertung von Markierungsinformationen von Rasterfeldern und eine Schutzfeldauswertung durchgeführt wird. In der Steuereinheit wird eine Sicherheitsfunktion ausgelöst, wenn innerhalb eines Schutzfeldes und wenigstens eines markierten Rasterfeldes innerhalb dieses Schutzfeldes ein sicherheitskritischer Objekteingriff registriert wird. Die Schutzfeldauswertung wird unabhängig von der Auswertung von Markierungsinformationen von Rasterfeldern durchgeführt.

Im allgemeinen, nicht-erfindungsgemäßen Fall weist der Sensor keine Schutzfelder, sondern nur Rasterfelder auf. In diesem Fall findet nur eine Rasterfeldauswertung und das Auslösen einer Sicherheitsfunktion in einer übergeordneten Steuereinheit statt. Hierzu überträgt der Sensor vorteilhaft die Markierungen der Rasterfelder mit einem sicheren Protokoll über einen Feldbus oder einen Ethernet-basierten Bus zu einer sicheren Steuereinheit.

Gemäß der Erfindung sind innerhalb des Überwachungsbereichs, der insbesondere einen Gefahrenbereich einer gefahrbringenden Maschine oder Anlage umfasst, auch ein oder mehrere Schutzfelder definiert, die mit dem oder den Sensoren auf Objekteingriffe überwacht werden, um so eine Gefahrenbereichsabsicherung zu realisieren. Zudem wird der Überwachungsbereich in die Anordnung von Rasterfeldern unterteilt, die für Objekterkennungen mit Markierungsinformationen markierbar sind.

Erfindungsgemäß ist eine Steuereinheit als übergeordnete Einheit vorgesehen, in welcher alle relevanten Informationen der Sensoren und des zu überwachenden Gefahrenbereichs vorhanden sind. Für die durchzuführende Gefahrenbereichsabsicherung erfolgt in der Steuereinheit nicht nur eine Schutzfeldüberwachung. Vielmehr werden hierfür auch Markierungsinformationen von Rasterfeldern ausgewertet, wodurch eine erhöhte Sicherheit und Zuverlässigkeit der Gefahrenbereichsabsicherung erzielt wird.

Weiterhin kann die Steuereinheit durch Änderung des oder der zu überwachenden Schutzfeldern und durch eine geeignete Vorgabe von Rasterfeldern, deren Markierungsinformationen ausgewertet werden, eine flexible Anpassung an sich ändernde Randbedingungen beziehungsweise Applikationen erfolgen.

Besonders vorteilhaft sind die Rasterfelder mit eindeutigen Kennungen versehen.

Damit können die einzelnen Rasterfelder in der Steuereinheit eindeutig identifiziert werden.

Erfindungsgemäß ist ein Rasterfeld bei einem Objekteingriff markiert.

Durch die selektive Objekterkennung in den einzelnen Rasterfeldern wird auf einfache Weise eine schnelle, ortsauflösende Objektdetektion ermöglicht, deren Auflösung durch die Größe der Rasterfelder bestimmt ist. Da nur das Vorhandensein von Objekten in einzelnen Rasterfeldern abgeprüft werden muss, wird eine einfache und schnelle ortsabhängige Objektdetektion realisiert.

Gemäß der Erfindung wird in der Steuereinheit eine Sicherheitsfunktion ausgelöst, wenn innerhalb eines Schutzfeldes und wenigstens eines Rasterfeldes innerhalb dieses Schutzfeldes ein sicherheitskritischer Objekteingriff registriert wird.

Dadurch, dass Objekteingriffe nicht nur in einem Schutzfeld registriert werden sondern zudem eine Analyse durch eine Rasterfeldauswertung erfolgt, ob ein solcher Objekteingriff tatsächlich sicherheitskritisch ist, können derartige sicherheitskritische Objekteingriffe zuverlässig von nicht sicherheitskritischen Objekten unterschieden werden, sodass die Sicherheitsfunktion, wie zum Beispiel das Stillsetzen einer gefahrbringenden Maschine oder Anlage nur bei sicherheitskritischen Objekteingriffen und nicht unnötigerweise bei nicht sicherheitskritischen Objekteingriffen erfolgt.

Ein wesentlicher Vorteil besteht somit in einer flexibel an aktuelle Gefahrensituationen angepasste Überwachungsfunktion der Sensoranordnung. Während bei bekannten Sensoranordnungen generell das gesamte Schutzfeld eine sicherheitskritische Zone bildet, bei der ein Objekteingriff zur Auslösung einer Sicherheitsfunktion führt, erfolgt bei der erfindungsgemäßen Sensoranordnung eine differenziertere Auswertung. Eine Sicherheitsfunktion wird nur ausgelöst, wenn in markierten Rasterfeldern eines Schutzfeldes ein Objekt detektiert wird. Damit kann der restliche Bereich des Schutzfeldes beispielsweise genutzt werden um Objekte, wie zum Beispiel Werkstücke durch das Schutzfeld zu transportieren, ohne dass unnötige Sicherheitsfunktionen ausgelöst werden.

Beispielsweise ist ein Rasterfeld nur dann markiert, wenn in diesem für eine Mindestzeit ein Objekt registriert wird.

Damit werden Objekteingriffe nur dann als sicherheitskritisch eingestuft, wenn sich ein Objekt länger oder gleich lang wie die vorgegebene Mindestzeit in einem Rasterfeld aufhält.

Gemäß einer vorteilhaften Weiterbildung werden ausgehend von der Objektdetektion in einem Rasterfeld hierzu benachbarte Rasterfelder markiert.

Insbesondere erfolgt die Markierung benachbarter Rasterfelder abhängig von der Bewegungsrichtung und/oder Geschwindigkeit des detektierten Objekts.

Weiterhin erfolgt eine Markierung von abgeschatteten Rasterfeldern, wenn in diesen Feldern Objekte erwartet werden.

Die erfindungsgemäße Auswertung ist dann dahingehend erweitert, dass insbesondere zur Auslösung der Sicherheitsfunktion nicht nur allein tatsächliche Detektionen von sicherheitskritischen Objekten zu Markierungen von Rasterfeldern führen. Vielmehr werden auch hierzu benachbarte Rasterfelder markiert, wodurch auch Wahrscheinlichkeiten für sicherheitskritische Objektbewegungen für die Auswertung herangezogen werden und insbesondere zur Auslösung von Sicherheitsfunktionen führen können.

Wird in einem Rasterfeld ein Objekt detektiert, so wird durch die zusätzliche Markierung benachbarter Rasterfelder eine mögliche, wahrscheinliche Migration von Objekten definiert, die insbesondere als sicherheitskritisch eingestuft werden kann. Diese Wahrscheinlichkeitsbetrachtung kann in Abhängigkeit der Bewegungsrichtung und/oder Geschwindigkeit des Objekts erfolgen.

Durch die Markierung abgeschatteter Rasterfelder, die von dem oder den Sensoren nicht eingesehen werden können, wird die Sicherheit bei der Gefahrenbereichsabsicherung weiter erhöht, da auch die markierten abgeschatteten Rasterfelder Markierungsinformationen generieren, die zur Auslösung der Sicherheitsfunktion führen, wenn zusätzlich in einem Schutzfeld ein Objekt detektiert wird.

Die Funktionalität der erfindungsgemäßen Sensoranordnung ist vorteilhaft dahingehend erweitert, dass mehrere Schutzfelder und/oder Warnfelder definiert werden, wobei über die Steuereinheit vorgebbar ist, welche Schutzfelder und/oder Warnfelder gemeinsam mit Markierungsinformationen von Rasterfeldern ausgewertet werden.

In diesem Fall wird in der Steuereinheit eine Sicherheitsfunktion ausgelöst, wenn innerhalb eines Schutzfeldes und wenigstens eines Rasterfeldes innerhalb dieses Schutzfeldes ein sicherheitskritischer Objekteingriff registriert wird.

Diese Sicherheitsfunktion kann beispielsweise darin bestehen, eine gefahrbringende Anlage oder Maschine mit verminderten Arbeitsgeschwindigkeit zu betreiben, wogegen bei einer Schutzfeldverletzung die Maschine oder Anlage komplett stillgesetzt wird.

Dies ist insbesondere dann sinnvoll, wenn mit einem Schutzfeld der unmittelbare Gefahrenbereich an der Maschine oder Anlage erfasst wird, jedoch mit dem Warnfeld ein dem Schutzfeld vorgelagerter, weniger kritischer Bereich erfasst wird.

Weiter vorteilhaft führen Objektdetektionen in Rasterfeldern außerhalb von Schutzfeldern oder Warnfeldern nicht zur Auslösung einer Sicherheitsfunktion.

Beispielsweise werden anhand von Markierungsinformationen von Rasterfeldern außerhalb von Schutzfeldern und Warnfeldern Objektverfolgungen durchgeführt.

Damit kann erfasst werden ob sich Objekte gefahrbringenden Zonen, insbesondere Schutzfeldern, nähern oder sich von diesen entfernen.

Gemäß einer vorteilhaften Ausführungsform umfassen die Markierungsinformationen Informationen, in welchen Schutzfeldern oder Warnfeldern das jeweilige Rasterfeld liegt.

Durch diese zusätzliche Markierungsinformation kann in der Steuereinheit unmittelbar ein Bezug der einzelnen Rasterfelder zu dem jeweiligen Schutzfeld oder Warnfeld hergestellt werden, wodurch eine sehr schnelle Auswertung in der Steuereinheit ermöglicht wird.

Besonders vorteilhaft wird in der Steuereinheit vorgegeben, welches Schutzfeld und/oder Warnfeld ausgewertet wird.

Weiterhin werden durch die Steuereinheit Geometrien von Rasterfeldern vorgegeben.

Schließlich sind die Geometrien von Rasterfeldern applikationsspezifisch oder an Koordinatensysteme eines Auswertesystems angepasst.

Damit werden alle Parameter für die durchzuführende Gefahrenbereichsüberwachung in der Steuereinheit festgelegt und von dieser kontrolliert.

Zur Erfüllung der Sicherheitsanforderungen für einen Einsatz im Bereich der Sicherheitstechnik bildet die Sensoranordnung ein Sicherheitssystem, wobei der oder die Sensoren Sicherheitssensoren sind.

Die Steuereinheit weist hierzu einen fehlersicheren, vorzugsweise redundanten, zweikanaligen Aufbau auf, ebenso wie in den Sicherheitssensoren integrierte Auswerteeinheiten.

Generell können die Sensoren in Form von Kamerasensoren, optischen Scannern, Radarsensoren und/oder Trittmatten gebildet sein.

Gemäß einer vorteilhaften Weiterbildung der Erfindung ist eine Rechnereinheit vorgesehen, in welcher Messdaten des oder mehrerer Sensoren ausgewertet werden und die so gewonnenen Informationen an die Steuereinheit weitergeleitet werden.

In dieser Rechnereinheit erfolgt vorteilhaft eine Anpassung an unterschiedliche Applikationen.

Vorteilhaft ist dabei, dass wenigstens ein zusätzlicher nicht sicherer Sensor vorgesehen ist, dessen Messdaten in der Rechnereinheit ausgewertet werden.

Als Resultate der Auswertung der Messdaten werden vorteilhaft in der Rechnereinheit Vorschläge für die Ausbildung von Schutzfeldern, Warnfeldern und/oder Geometrien von Rasterfeldern generiert.

Weiterhin werden in der Rechnereinheit Vorschläge für die Anordnung von Sicherheitssensoren generiert.

So kann eine applikationsspezifische Anpassung der Sensoranordnung erfolgen.

Gemäß einer vorteilhaften Ausführungsform sind deren Komponenten über leitungsgebundene oder berührungslos arbeitende Schnittstellen verbunden sind.

Leitungsgebundene Schnittstellen können in Form von seriellen Schnittstellen oder insbesondere Busverbindungen gebildet sein. Berührungslos arbeitende Schnittstellen können als optische oder Funk-Schnittstellen ausgebildet sein.

Schließlich kann vorteilhaft die Steuereinheit ein Cloud-Rechner sein.

In diesem Fall ist eine Internet-Verbindung zur Cloud und der Steuereinheit vorhanden.

Die Erfindung wird im Folgenden anhand der Zeichnungen erläutert. Es zeigen:
- Figur 1:: Erstes Ausführungsbeispiel der erfindungsgemäßen Sensoranordnung.
- Figur 2:: Zweites Ausführungsbeispiel der erfindungsgemäßen Sensoranordnung.

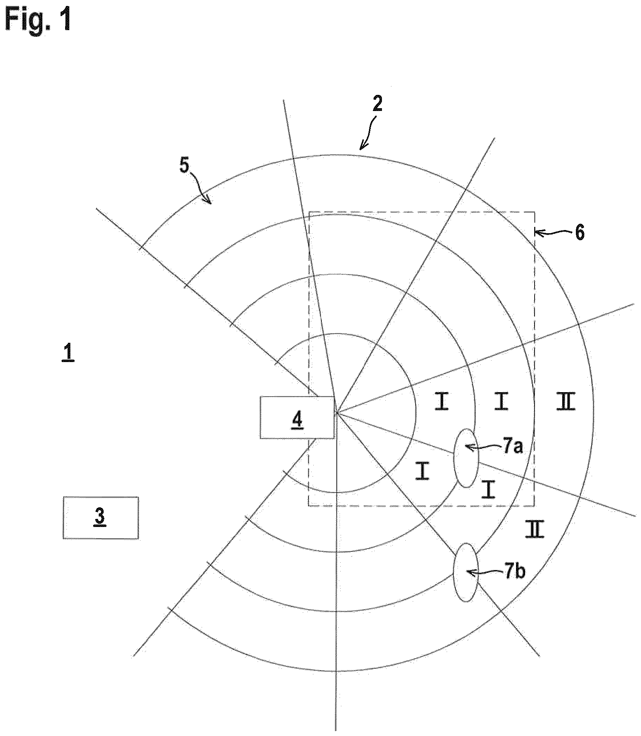

Figur 1 zeigt stark schematisiert ein erstes Ausführungsbeispiel der erfindungsgemäßen Sensoranordnung 1. Die Sensoranordnung 1 umfasst im vorliegenden Fall nur einen Sensor zur Überwachung eines Überwachungsbereichs 2 sowie eine Steuereinheit 3.

Die Sensoranordnung 1 ist als Sicherheitssystem ausgebildet. Demzufolge ist die Steuereinheit 3 als Sicherheitssteuerung ausgebildet, die einen zweikanaligen, redundanten und damit fehlersicheren Aufbau aufweist.

Auch der Sensor ist als Sicherheitssensor 4 ausgebildet und weist einen fehlersicheren, insbesondere zweikanaligen, redundanten Aufbau auf.

Der Sensor ist im vorliegenden Fall als Flächendistanzsensor, das heißt als optischer scannender Distanzsensor ausgebildet. Der Flächendistanzsensor weist in bekannter Weise einen nach einem Laufzeit-Verfahren arbeitenden Distanzsensor mit einem Lichtstrahlen emittierenden Sender und einem Lichtstrahlen empfangenden Empfänger sowie eine Ablenkeinheit zur Ablenkung der Lichtstrahlen auf. Weiterhin umfasst der Flächendistanzsensor eine zweikanalige Auswerteeinheit zur Signalauswertung.

Generell können als Sensoren auch andere optische Sensoren wie zum Beispiel Kamerasensoren eingesetzt werden. Auch können Scanner in Form von Radarsensoren, Trittmatten und dergleichen eingesetzt werden.

Die Steuereinheit 3 ist mit dem Flächendistanzsensor über leitungsgebundene oder berührungslos arbeitende Schnittstellen verbunden. Die Steuereinheit 3 kann insbesondere von einem Cloud-Rechner gebildet sein.

Entsprechend der Ablenkbewegung der Lichtstrahlen des Flächendistanzsensors wird mit diesem ein kreissegmentförmiger flächiger Überwachungsbereich 2 überwacht. An diese Geometrie angepasst ist der Überwachungsbereich 2 in einzelne Rasterfelder 5 unterteilt. Weiterhin ist innerhalb des Überwachungsbereichs 2 ein Schutzfeld 6 definiert, das vorzugsweise über die Steuereinheit 3 vorgegeben und in den Sicherheitssensor 4 eingegeben wird. Alternativ wird das Schutzfeld über ein Programm auf einem PC, Laptop, Tablet, Smartphone oder anderer Computer definiert und im Sicherheitssensor 4 gespeichert.

Die Rasterfelder 5 sind mit eindeutigen Kennungen versehen und so eindeutig in der Steuereinheit 3 identifizierbar.

Mit dieser Sensoranordnung 1 erfolgt eine Gefahrenbereichsüberwachung an einer gefahrbringenden Maschine oder Anlage.

Hierzu erfolgt in der Steuereinheit 3 erfindungsgemäß eine Auswertung von Markierungsinformationen von Rasterfeldern 5 in Kombination mit einer Schutzfeldauswertung.

Dabei wird in der Steuereinheit 3 eine Sicherheitsfunktion, beispielsweise das Stillsetzen der Maschine oder Anlage, dann ausgelöst, wenn innerhalb des Schutzfeldes 6 ein Objekt detektiert wird und wenn für Rasterfelder 5 innerhalb des Schutzfeldes 6 Markierungsinformationen erhalten werden, die auf einen sicherheitskritischen Objekteingriff schließen lassen.

In einem alternativen nicht-erfindungsgemäßen Beispiel wertet die Steuereinheit 3 nur die Markierungsinformationen der Rasterfelder aus, ohne dass eine Schutzfeldinformation außerhalb der Steuereinheit 3 notwendig ist. In diesem Fall reicht es aus, dass die Markierungsinformation der Rasterfelder auf einen sicherheitskritischen Objekteingriff schließen lassen. Im einfachsten Fall wird bei einem Objekteingriff in ein Rasterfeld 5 dieses markiert. Diese Markierungsinformation wird in der Steuereinheit 3 ausgewertet. Befindet sich das Objekt innerhalb des Schutzfeldes 6 und wird auch dort ein Objekteingriff registriert, löst die Steuereinheit 3 die Sicherheitsfunktion aus.

In einer Weiterbildung ist ein Rasterfeld 5 nur dann markiert, wenn in diesem für eine Mindestzeit ein Objekt registriert wird.

Dann wird die Sicherheitsfunktion in der Steuereinheit 3 nur dann ausgelöst, wenn im Schutzfeld 6 ein Objekteingriff registriert wird und in einem Rasterfeld 5 ein Objekt für eine der Mindestzeit entsprechende Zeit oder diese übersteigende Zeit registriert wird.

Wie aus Figur 1 ersichtlich, werden für eine Detektion eines im Schutzfeld 6 angeordneten Objekts 7a die Rasterfelder 5, in denen dieses Objekt 7a angeordnet ist, markiert. Diese Rasterfelder 5 sind in Figur 1 mit I bezeichnet. Diese Markierungsinformationen werden, vorzugsweise mit der Zuordnung der einzelnen Rasterfelder 5 zu dem Schutzfeld 6, an die Steuereinheit 3 übertragen.

Während bei der Detektion des Objekts 7a in der Steuereinheit 3 die Sicherheitsfunktion ausgelöst wird, wird bei der Detektion des Objekts 7b außerhalb des Schutzfeldes 6 keine Sicherheitsfunktion ausgelöst, da zwar eine Markierung der Rasterfelder 5 in welchen das Objekt 7b detektiert wird erfolgt, jedoch für dieses keine Objektdetektion im Schutzfeld 6 erfolgt. Jedoch kann anhand der Markierungen eine Objektverfolgung durchgeführt werden.

In einer Weiterbildung ist die Auswertung dahingehend erweitert, dass neben den Rasterfeldern 5, in denen sich das Objekt 7a aufhält, weiterhin auch hierzu benachbarte Rasterfelder 5 markiert werden (in Figur 1 mit II bezeichnet). Vorteilhaft erfolgt die Markierung benachbarter Rasterfelder 5 abhängig von der Bewegungsrichtung und/oder Geschwindigkeit des detektierten Objekts 7a.

Auch ist es möglich, dass eine Markierung von abgeschatteten Rasterfeldern 5 erfolgt, wenn in diesen Feldern Objekte erwartet werden.

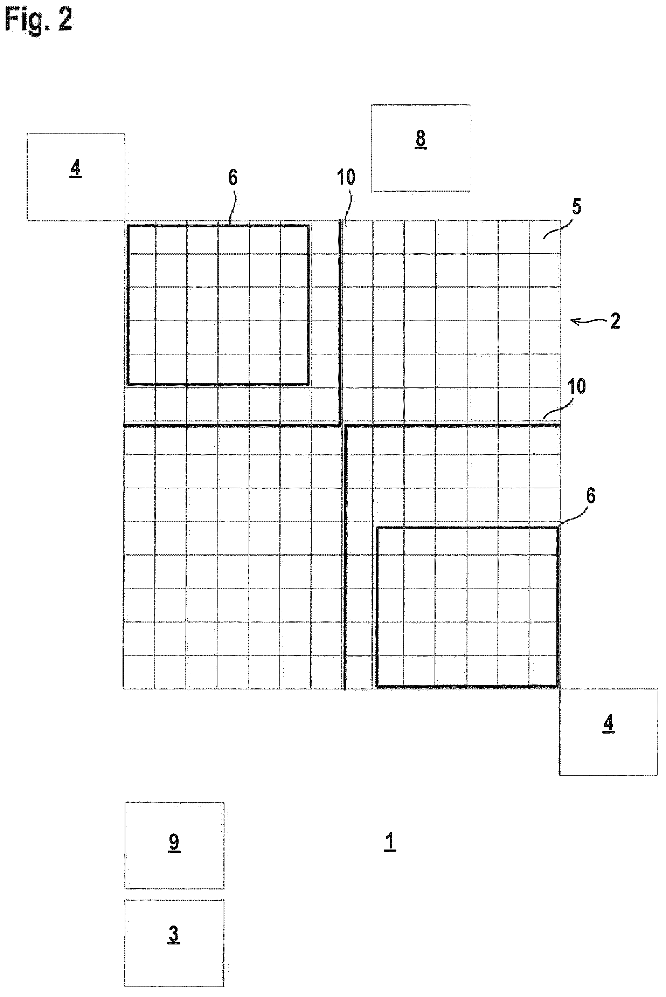

Figur 2 zeigt ein weiteres Ausführungsbeispiel der erfindungsgemäßen Sensoranordnung 1. Diese Sensoranordnung 1 umfasst neben der Steuereinheit 3 zwei Sicherheitssensoren 4, die wieder von Flächendistanzsensoren gebildet sind.

Der Überwachungsbereich 2 wird zudem mit einem nicht sicheren Sensor 8 überwacht, der im vorliegenden Fall von einem Kamerasensor gebildet ist, der vorteilhaft oberhalb des Überwachungsbereichs 2 angebracht ist.

Schließlich ist eine Rechnereinheit 9 vorgesehen, die von einem Controller oder dergleichen gebildet ist. Die Rechnereinheit 9 ist an die Sicherheitssensoren 4 und den nicht sicheren Sensor 8 angeschlossen, sodass deren Messdaten in der Rechnereinheit 9 ausgewertet werden können. Die Rechnereinheit 9 ist auch an die Steuereinheit 3 angeschlossen, sodass die Ergebnisse der Auswertung der Messdaten von der Rechnereinheit 9 an die Steuereinheit 3 weitergegeben werden können.

Wie Figur 2 zeigt, wird mit jedem Sicherheitssensor 4 jeweils ein Schutzfeld 6 und ein daran angrenzendes Warnfeld 10 überwacht.

Dabei wird in der Steuereinheit 3 vorgegeben, welches Schutzfeld 6 und/oder Warnfeld 10 ausgewertet wird.

Weiterhin werden durch die Steuereinheit 3 Geometrien von Rasterfeldern 5 vorgegeben.

Insbesondere sind die Geometrien von Rasterfeldern 5 applikationsspezifisch oder an Koordinatensysteme eines Auswertesystems angepasst.

Anhand der Auswertung der Messdaten der Sicherheitssensoren 4 und des nicht sicheren Sensors 8 werden in der Rechnereinheit 9 Vorschläge für die Ausbildung von Schutzfeldern 6, Warnfeldern 10 und/oder Geometrien von Rasterfeldern 5 generiert. Die Schutzfelder können entweder an den Sicherheitssensor übertragen oder in der Steuereinheit ausgewertet werden.

Weiterhin werden in der Rechnereinheit 9 Vorschläge für die Anordnung von Sicherheitssensoren 4 generiert.

Auf diese Weise wird die Sensoranordnung 1 für die jeweilige Applikation optimiert.

### Bezugszeichenliste

- (1): Sensoranordnung
- (2): Überwachungsbereich
- (3): Steuereinheit
- (4): Sicherheitssensor
- (5): Rasterfeld
- (6): Schutzfeld
- (7a): Objekt
- (7b): Objekt
- (8): Sensor, nicht sicherer
- (9): Rechnereinheit
- (10): Warnfeld

- I: markiertes Rasterfeld
- II: markiertes Rasterfeld

## Patentansprüche

1. Sensoranordnung (1) mit wenigstens einem Sensor zur Erfassung Objekten in einem Überwachungsbereich (2), wobei der Überwachungsbereich (2) in Rasterfelder (5) unterteilt ist und wobei innerhalb des Überwachungsbereichs (2) wenigstens ein Schutzfeld (6) definiert ist, wobei mit dem Sensor ein Rasterfeld (5) bei einem Objekteingriff markiert ist, und mit dem Sensor das Schutzfeld (6) überwacht wird, und wobei eine Steuereinheit (3) vorgesehen ist, in welcher eine Auswertung von Markierungsinformationen von Rasterfeldern (5) und eine Schutzfeldauswertung durchgeführt wird, wobei in der Steuereinheit (3) eine Sicherheitsfunktion ausgelöst wird, wenn innerhalb eines Schutzfeldes (6) und wenigstens eines markierten Rasterfeldes (5) innerhalb dieses Schutzfeldes (6) ein sicherheitskritischer Objekteingriff registriert wird, **dadurch gekennzeichnet, dass** die Schutzfeldauswertung unabhängig von der Auswertung von Markierungsinformationen von Rasterfeldern (5) durchgeführt wird.

2. Sensoranordnung (1) nach Anspruch 1, **dadurch gekennzeichnet, dass** die Rasterfelder (5) mit eindeutigen Kennungen versehen sind.

3. Sensoranordnung (1) nach Anspruch 1 oder 2, **dadurch gekennzeichnet, dass** ein Rasterfeld (5) nur dann markiert ist, wenn in diesem für eine Mindestzeit ein Objekt (7a) registriert wird.

4. Sensoranordnung (1) nach einem der Ansprüche 1 bis 3, **dadurch gekennzeichnet, dass** ausgehend von der Objektdetektion in einem Rasterfeld (5) hierzu benachbarte Rasterfelder (5) markiert werden.

5. Sensoranordnung (1) nach Anspruch 4, **dadurch gekennzeichnet, dass** die Markierung benachbarter Rasterfelder (5) abhängig von der Bewegungsrichtung und/oder Geschwindigkeit des detektierten Objekts (7a) erfolgt.

6. Sensoranordnung (1) nach einem der Ansprüche 4 oder 5, **dadurch gekennzeichnet, dass** eine Markierung von abgeschatteten Rasterfeldern (5) erfolgt, wenn in diesen Objekte erwartet werden.

7. Sensoranordnung (1) nach einem der Ansprüche 1 bis 6, **dadurch gekennzeichnet, dass** mehrere Schutzfelder (6) und/oder Warnfelder (10) definiert werden, wobei über die Steuereinheit (3) vorgebbar ist, welche Schutzfelder (6) und/oder Warnfelder (10) gemeinsam mit Markierungsinformationen von Rasterfeldern (5) ausgewertet werden.

8. Sensoranordnung (1) nach einem der Ansprüche 1 bis 7, **dadurch gekennzeichnet, dass** in den Schutzfeldern (6) eine Sicherheitsfunktion ausgelöst wird, wenn innerhalb eines Warnfeldes (10) und wenigstens eines Rasterfeldes (5) innerhalb dieses Warnfeldes (10) ein sicherheitskritischer Objekteingriff registriert wird.

9. Sensoranordnung (1) nach einem der Ansprüche 1 bis 8, **dadurch gekennzeichnet, dass** Objektdetektionen in Rasterfeldern (5) außerhalb von Schutzfeldern (6) oder Warnfeldern (10) nicht zur Auslösung einer Sicherheitsfunktion führen.

10. Sensoranordnung (1) nach Anspruch 9, **dadurch gekennzeichnet, dass** anhand von Markierungsinformationen von Rasterfeldern (5) außerhalb von Schutzfeldern (6) und Warnfeldern (10) Objektverfolgungen durchgeführt werden.

11. Sensoranordnung (1) nach einem der Ansprüche 1 bis 10, **dadurch gekennzeichnet, dass** die Markierungsinformationen Informationen umfassen, in welchen Schutzfeldern (6) oder Warnfeldern (10) das jeweilige Rasterfeld (5) liegt.

12. Sensoranordnung (1) nach einem der Ansprüche 1 bis 11, **dadurch gekennzeichnet, dass** in der Steuereinheit (3) vorgegeben wird, welches Schutzfeld (6) und/oder Warnfeld (10) ausgewertet wird.

13. Sensoranordnung (1) nach einem der Ansprüche 1 bis 12, **dadurch gekennzeichnet, dass** durch die Steuereinheit (3) Geometrien von Rasterfeldern (5) vorgegeben werden.

14. Sensoranordnung (1) nach Anspruch 13, **dadurch gekennzeichnet, dass** die Geometrien von Rasterfeldern (5) applikationsspezifisch oder an Koordinatensysteme eines Auswertesystems angepasst sind.

15. Sensoranordnung (1) nach einem der Ansprüche 1 bis 14, **dadurch gekennzeichnet, dass** dieses ein Sicherheitssystem ist, wobei der oder die Sensoren Sicherheitssensoren (4) sind.

16. Sensoranordnung (1) nach einem der Ansprüche 1 bis 15, **dadurch gekennzeichnet, dass** die Sensoren in Form von Kamerasensoren, optischen Scannern, Radarsensoren und/oder Trittmatten gebildet sind.

17. Sensoranordnung (1) nach einem der Ansprüche 1 bis 16, **dadurch gekennzeichnet, dass** eine Rechnereinheit (9) vorgesehen ist, in welcher Messdaten des oder mehrerer Sensoren ausgewertet werden und die so gewonnenen Informationen an die Steuereinheit (3) weitergeleitet werden.

18. Sensoranordnung (1) nach Anspruch 17, **dadurch gekennzeichnet, dass** wenigstens ein zusätzlicher nicht sicherer Sensor (8) vorgesehen ist, dessen Messdaten in der Rechnereinheit (9) ausgewertet werden.

19. Sensoranordnung (1) nach einem der Ansprüche 17 oder 18, **dadurch gekennzeichnet, dass** in der Rechnereinheit (9) Vorschläge für die Ausbildung von Schutzfeldern (6), Warnfeldern (10) und/oder Geometrien von Rasterfeldern (5) generiert werden.

20. Sensoranordnung (1) nach einem der Ansprüche 17 bis 19, **dadurch gekennzeichnet, dass** in der Rechnereinheit (9) Vorschläge für die Anordnung von Sicherheitssensoren (4) generiert werden.

21. Sensoranordnung (1) nach einem der Ansprüche 1 bis 20, **dadurch gekennzeichnet, dass** deren Komponenten über leitungsgebundene oder berührungslos arbeitende Schnittstellen verbunden sind.

22. Sensoranordnung (1) nach einem der Ansprüche 1 bis 21, **dadurch gekennzeichnet, dass** die Schnittstellen sichere Schnittstellen sind.

23. Sensoranordnung (1) nach einem der Ansprüche 1 bis 22, **dadurch gekennzeichnet, dass** die Steuereinheit (3) ein Cloud-Rechner ist.

## Claims

1. A sensor assembly (1) with at least one sensor for detecting objects in a monitoring area (2), wherein the monitoring area (2) is subdivided into grid fields (5) and wherein at least one protective field (6) is defined within the monitoring area (2), wherein a grid field (5) is marked with the sensor when an object is engaged, and the protective field (6) is monitored with the sensor, and wherein a control unit (3) is provided, in which an evaluation of marking information of raster fields (5) and a protective field evaluation is carried out, wherein a safety function is triggered in the control unit (3) if a safety-critical object intervention is registered within a protective field (6) and at least one marked raster field (5) within this protective field (6), **characterised in that** the protective field evaluation is carried out independently of the evaluation of marking information of raster fields (5).

2. A sensor assembly (1) according to claim 1, **characterised in that** the raster fields (5) are provided with unique identifiers.

3. A sensor assembly (1) according to claim 1 or 2, **characterised in that** a grid field (5) is only marked if an object (7a) is registered in it for a minimum time.

4. A sensor assembly (1) according to one of claims 1 to 3, **characterised in that**, starting from the object detection in a raster field (5), adjacent raster fields (5) are marked for this purpose.

5. A sensor assembly (1) according to claim 4, **characterised in that** the marking of adjacent raster fields (5) is dependent on the direction of movement and/or speed of the detected object (7a).

6. A sensor assembly (1) according to one of claims 4 or 5, **characterised in that** shadowed raster fields (5) are marked if objects are expected in them.

7. A sensor assembly (1) according to one of claims 1 to 6, **characterised in that** a plurality of protective fields (6) and/or warning fields (10) are defined, it being possible to specify via the control unit (3) which protective fields (6) and/or warning fields (10) are evaluated together with marking information from raster fields (5).

8. A sensor assembly (1) according to one of claims 1 to 7, **characterised in that** a safety function is triggered in the protective fields (6) if a safety-critical object intrusion is registered within a warning field (10) and at least one grid field (5) within this warning field (10).

9. A sensor assembly (1) according to one of claims 1 to 8, **characterised in that** object detections in grid fields (5) outside protective fields (6) or warning fields (10) do not trigger a safety function.

10. A sensor assembly (1) according to claim 9, **characterised in that** object tracking is carried out using marking information from raster fields (5) outside protective fields (6) and warning fields (10).

11. A sensor assembly (1) according to one of claims 1 to 10, **characterised in that** the marking information comprises information in which protective fields (6) or warning fields (10) the respective raster field (5) is located.

12. A sensor assembly (1) according to one of claims 1 to 11, **characterised in that** the protective field (6) and/or warning field (10) to be evaluated is specified in the control unit (3).

13. A sensor assembly (1) according to one of claims 1 to 12, **characterised in that** geometries of raster fields (5) are specified by the control unit (3).

14. A sensor assembly (1) according to claim 13, **characterised in that** the geometries of raster fields (5) are application-specific or adapted to coordinate systems of an evaluation system.

15. A sensor assembly (1) according to one of claims 1 to 14, **characterised in that** this is a safety system, wherein the sensor or sensors are safety sensors (4).

16. A sensor assembly (1) according to one of claims 1 to 15, **characterised in that** the sensors are formed in the form of camera sensors, optical scanners, radar sensors and/or tread mats.

17. A sensor assembly (1) according to one of claims 1 to 16, **characterised in that** a computer unit (9) is provided in which measurement data from the sensor or sensors are evaluated and the information thus obtained is forwarded to the control unit (3).

18. A sensor assembly (1) according to claim 17, **characterised in that** at least one additional non-secure sensor (8) is provided, the measurement data of which are evaluated in the computer unit (9).

19. A sensor assembly (1) according to one of claims 17 or 18, **characterised in that** suggestions for the formation of protective fields (6), warning fields (10) and/or geometries of raster fields (5) are generated in the computer unit (9).

20. A sensor assembly (1) according to one of claims 17 to 19, **characterised in that** suggestions for the assembly of safety sensors (4) are generated in the computer unit (9).

21. A sensor assembly (1) according to one of claims 1 to 20, **characterised in that** its components are connected via wired or non-contact interfaces.

22. A sensor assembly (1) according to one of claims 1 to 21, **characterised in that** the interfaces are secure interfaces.

23. A sensor assembly (1) according to one of claims 1 to 22, **characterised in that** the control unit (3) is a cloud computer.

## Revendications

1. Agencement de capteurs (1) avec au moins un capteur pour détecter des objets dans une zone de surveillance (2), dans lequel la zone de surveillance (2) est subdivisée en champs de trame (5) et dans lequel au moins un champ de protection (6) est défini dans la zone de surveillance (2), dans lequel un champ de trame (5) est marqué par le capteur lorsqu'un objet est engagé, et le champ de protection (6) est surveillé par le capteur, et dans lequel une unité de commande (3) est prévue, dans laquelle une évaluation des informations de marquage des champs de trame (5) et une évaluation du champ de protection sont effectuées, dans laquelle une fonction de sécurité est déclenchée dans l'unité de commande (3) si une intervention d'objet critique pour la sécurité est enregistrée dans un champ de protection (6) et au moins un champ de trame marqué (5) dans ce champ de protection (6), **caractérisée par le fait que** l'évaluation du champ de protection est effectuée indépendamment de l'évaluation des informations de marquage des champs de trame (5).

2. Agencement de capteurs (1) selon la revendication 1, **caractérisé par le fait que** les champs de trame (5) sont dotés d'identificateurs uniques.

3. Agencement de capteurs (1) selon les revendications 1 ou 2, **caractérisé par le fait qu'**un champ de grille (5) n'est marqué que si un objet (7a) y est enregistré pendant une durée minimale.

4. Agencement de capteurs (1) selon l'une des revendications 1 à 3, **caractérisé par le fait qu'**à partir de la détection d'un objet dans un champ de trame (5), les champs de trame adjacents (5) sont marqués à cet effet.

5. Agencement de capteurs (1) selon la revendication 4, **caractérisé par le fait que** le marquage des champs de trame adjacents (5) dépend de la direction du mouvement et/ou de la vitesse de l'objet détecté (7a).

6. Agencement de capteurs (1) selon l'une des revendications 4 ou 5, **caractérisé par le fait que** les champs matriciels ombragés (5) sont marqués si des objets y sont attendus.

7. Agencement de capteurs (1) selon l'une des revendications 1 à 6, **caractérisé par** la définition de plusieurs champs de protection (6) et/ou champs d'alerte (10), l'unité de commande (3) permettant de spécifier quels champs de protection (6) et/ou champs d'alerte (10) sont évalués avec les informations de marquage des champs de trame (5).

8. Agencement de capteurs (1) selon l'une des revendications 1 à 7, **caractérisé par le fait qu'**une fonction de sécurité est déclenchée dans les champs de protection (6) si une intrusion d'objet critique pour la sécurité est enregistrée dans un champ d'alerte (10) et au moins un champ de grille (5) dans ce champ d'alerte (10).

9. Agencement de capteurs (1) selon l'une des revendications 1 à 8, **caractérisé par le fait que** les détections d'objets dans les champs de grille (5) en dehors des champs de protection (6) ou des champs d'alerte (10) ne déclenchent pas de fonction de sécurité.

10. Agencement de capteurs (1) selon la revendication 9, **caractérisé par le fait que** le suivi de l'objet est effectué à l'aide des informations de marquage des champs de trame (5) à l'extérieur des champs de protection (6) et des champs d'avertissement (10).

11. Agencement de capteurs (1) selon l'une des revendications 1 à 10, **caractérisé par le fait que** les informations de marquage comprennent des informations sur les champs de protection (6) ou les champs d'alerte (10) dans lesquels se trouve le champ de trame respectif (5).

12. Agencement de capteurs (1) selon l'une des revendications 1 à 11, **caractérisé par le fait que** le champ de protection (6) et/ou le champ d'alerte (10) à évaluer est spécifié dans l'unité de commande (3).

13. Agencement de capteurs (1) selon l'une des revendications 1 à 12, **caractérisé par le fait que** les géométries des champs de trame (5) sont spécifiées par l'unité de commande (3).

14. Agencement de capteurs (1) selon la revendication 13, **caractérisé par le fait que** les géométries des champs de trame (5) sont spécifiques à l'application ou adaptées aux systèmes de coordonnées d'un système d'évaluation.

15. Agencement de capteurs (1) selon l'une des revendications 1 à 14, **caractérisé par le fait qu'**il s'agit d'un système de sécurité, dans lequel le ou les capteurs sont des capteurs de sécurité (4).

16. Agencement de capteurs (1) selon l'une des revendications 1 à 15, **caractérisé par le fait que** les capteurs se présentent sous la forme de capteurs de caméra, de scanners optiques, de capteurs radar et/ou de tapis roulants.

17. Agencement de capteurs (1) selon l'une des revendications 1 à 16, **caractérisé en ce qu'**une unité informatique (9) est prévue pour évaluer les données de mesure du ou des capteurs et transmettre les informations ainsi obtenues à l'unité de commande (3).

18. Agencement de capteurs (1) selon la revendication 17, **caractérisé par** la présence d'au moins un capteur supplémentaire non sécurisé (8), dont les données de mesure sont évaluées à l'adresse dans l'unité informatique (9).

19. Agencement de capteurs (1) selon l'une des revendications 17 ou 18, **caractérisé par le fait que** des suggestions pour la formation de champs de protection (6), de champs d'alerte (10) et/ou de géométries de champs tramés (5) sont générées dans l'unité informatique (9).

20. Agencement de capteurs (1) selon l'une des revendications 17 à 19, **caractérisé par le fait que** des suggestions pour la disposition des capteurs de sécurité (4) sont générées dans l'unité informatique (9).

21. Agencement de capteurs (1) selon l'une des revendications 1 à 20, **caractérisé par le fait que** ses composants sont reliés par des interfaces câblées ou sans contact.

22. Agencement de capteurs (1) selon l'une des revendications 1 à 21, **caractérisé par le fait que** les interfaces sont des interfaces sécurisées.

23. Agencement de capteurs (1) selon l'une des revendications 1 à 22, **caractérisé par le fait que** l'unité de commande (3) est un ordinateur en nuage.
